# EUROPÄISCHE PATENTSCHRIFT

(11) **EP 3 044 032 B1**
(45) Veröffentlichungstag und Bekanntmachung des Hinweises auf die Patenterteilung: **29.08.2018**
(21) Anmeldenummer: 14761634.6
(22) Anmeldetag: 08.09.2014
(51) Int. Cl.: B60N 2/015, B60N 2/90, B60N 2/22, B60N 2/02, B60N 2/36

(54) **AKTUATOR FÜR EINEN FAHRZEUGSITZ UND FAHRZEUGSITZ**
ACTUATOR FOR A VEHICLE SEAT, AND VEHICLE SEAT
ACTIONNEUR POUR SIÈGE DE VÉHICULE ET SIÈGE DE VÉHICULE

(30) Priorität: 09.09.2013 DE 102013218016; 27.11.2013 DE 102013224248
(43) Veröffentlichungstag der Anmeldung: 20.07.2016
(60) Teilanmeldung: 16155794.7
(73) Patentinhaber: Adient Luxembourg Holding S.à r.l., 1855 Luxembourg (LU)
(72) Erfinder: HEEG, Norbert, 66994 Dahn (DE); MUELLER, Peter, 67686 Mackenbach (DE)
(74) Vertreter: Liedhegener, Ralf
(86) Internationale Anmeldenummer: PCT/EP2014/069090
(87) Internationale Veröffentlichungsnummer: WO 2015/032946

(56) Entgegenhaltungen:
- EP-A1- 2 062 758
- WO-A1-2010/115626
- WO-A1-2012/104027
- DE-U1- 9 408 916

## Beschreibung

Die Erfindung betrifft einen Aktuator für einen Fahrzeugsitz mit den Merkmalen des Oberbegriffs des Anspruchs 1 sowie einen Fahrzeugsitz mit den Merkmalen des Anspruchs 13.

### Stand der Technik

Aus der WO 2012/104027 A1 ist ein gattungsgemäßer Aktuator bekannt, mittels dessen beispielsweise eine aus der WO 2012/152361 A1 bekannte Verriegelungseinheit entriegelt werden kann.
Verriegelungseinheiten kommen in Fahrzeugsitzen in vielfältiger Form vor. Die wesentliche Aufgabe von bekannten Verriegelungseinheiten besteht darin, unterschiedliche Sitzkonstellationen des Fahrzeugsitzes (z.B. das Umklappen einer Rücksitzlehne zur Erweiterung des Kofferraumes) erzeugen zu können oder eine Komforteinstellung des Fahrzeugsitzes (Fahrer- und/oder Fondsitze) zu ermöglichen. Beide Aufgaben werden durch unterschiedliche Kategorien der Verriegelungseinheit sichergestellt.
Die erste Kategorie der Verriegelungseinheiten umfasst Fixpunktverriegelungen. Diese sind dadurch gekennzeichnet, dass die Verriegelungseinheit nur in einer Position des Sitzes und/oder der Rückenlehne verriegelt und damit den Sitz und/oder die Rückenlehne relativ zu einem benachbarten Bauteil, in der Regel zu dem Fahrzeug, fixiert. Diese Verriegelungseinheiten, beispielsweise Drehfallenschlösser, werden mitunter als Lock oder Latch bezeichnet und kommen typischerweise bei umklappbaren Rückenlehnen zur Kofferraumerweiterung zum Einsatz. Weitestgehend wird die Verriegelungseinheit in der Rückenlehne platziert. Weitere Anwendungsfälle sind Verriegelungen von entnehmbaren Sitzen am Fahrzeugboden, aber auch Verriegelungen innerhalb eines Sitzes bei flexiblen Sitzanlagen.

Die zweite Kategorie der Verriegelungseinheiten unterscheidet sich von der ersten Kategorie dadurch, dass sich die Verriegelungseinheiten in unterschiedlichen Positionen verriegeln lassen. Damit können Bestandteile des Sitzes relativ zum Sitz selbst und/oder zum Fahrzeug gemäß den Vorgaben eines Kunden eingestellt werden. Diese Kategorie wird typischerweise zur Lehnenneigungseinstellung verwendet. In einigen Fällen sind diese Verriegelungseinheiten auch in der Form erweitert, dass sich damit ein Umklappen einer Rücksitzbankanlage realisieren lässt. Diese Verriegelungseinheiten, beispielsweise Rastbeschläge, werden mitunter auch als Lever bezeichnet.

Die Betätigung der Verriegelungseinheiten erfolgt weitestgehend von Hand (manuelle Betätigung). In Abhängigkeit der Bauraumsituation und der Anforderungen kann eine Betätigungseinheit für die Verriegelungseinheit von der Verriegelungseinheit örtlich getrennt sein. Dann wird üblicherweise über einen Bowdenzug die Kraft von der Betätigungseinheit auf die Verriegelungseinheit übertragen. Der Sitzbenutzer gibt dementsprechend das Signal und liefert zeitgleich die notwendige Kraft, um die Verriegelungseinheit zu entriegeln. Mitunter und vor allem bei dem Einsatz von Bowdenzügen kann es zu einem erheblichen Betätigungskraftanstieg kommen.

Zur Verbesserung des Komforts kommt neben der manuellen Betätigung auch eine elektrische Betätigung zum Einsatz. In diesen Fällen wird nur der Auslösebefehl von einem Nutzer gegeben. Die notwendige Kraft wird dann durch einen Aktuator erzeugt, der in Konsequenz die Verriegelungseinheit öffnet.
Die unterschiedlichen Anforderungen, die dabei an die Aktuatoren - sowohl vom Fahrzeug als auch vom Sitzbenutzer - gestellt werden, können durch die aus dem Stand der Technik bekannten Aktuatoren nicht erfüllt werden. Zur Sicherstellung zusätzlicher Funktionen, wie z.B. einer Positionserkennung, einer Statusabfrage, einer Kommunikation oder einer Trennung von Signal und Leistung, kommen weitere Sensoren, Anzeigeelemente und/oder externe Steuergeräte zum Einsatz. Damit sind jedoch Nachteile verbunden, da ein Steuergerät oftmals nicht in der Nähe der Aktuatoren verbaut werden kann, wodurch bestimmte Funktionalitäten, wie z.B. eine Ansteuerung der Aktuatoren über eine Puls Weiten Modulation (kurz PWM), nur mit einem hohen Aufwand erreicht werden können. Des Weiteren müssen weitere Sensoren eingesetzt werden, um komplexe Informationen für den Nutzer zu erzeugen. So muss ein zusätzlicher Winkelgeber eingebaut werden, um eine Entriegelung wieder zu negieren, nachdem die Rückenlehne vollständig umgelegt ist und in dieser Lage verriegelt sein soll.
Ein Aktuator, der über eine entsprechende Steuereinheit verfügt, ist in der o.g. WO 2012/104027 A1 beschrieben. Dieser Aktuator verfügt über die Möglichkeit einer elektrischen Vor- und Rückstellung in Abhängigkeit der Position des Stellelementes im Aktuator, welches in den jeweiligen Endlagen sensiert wird. Damit ist eine elektrische Selbstrückstellung möglich, die den Entfall der Rückstellfeder zulässt.

### Aufgabe

Der Erfindung liegt die Aufgabe zu Grunde, einen Aktuator, der den Verriegelungszustand einer mit dem Aktuator gekoppelten Verriegelungseinheit zuverlässig ermitteln kann, zur Verfügung zu stellen. Zudem soll die Lage des Aktuators im Schwerkraftfeld der Erde ermittelbar sein, um daraus Rückschlüsse über die Lage der mit der Verriegelungseinheit zu verriegelnden Sitzkomponente, beispielsweise einer Rückenlehne, zu erhalten.

Die Aufgabe besteht somit darin, den Aktuator "intelligent" zu gestalten, so dass er in der Lage ist, den Verriegelungszustand, also verriegelt oder nicht verriegelt, der Verriegelungseinheit, seinen eigenen Zustand und weitere Zustände, wie beispielsweise eine umgeklappte Rückenlehne, also eine Position außerhalb einer einsitzbaren Position, zu erkennen.

Die "Intelligenz" des Aktuators soll dahin ausgelegt sein, um zusätzliche externe Sensoren zu vermeiden. Die Betätigung der Verriegelungseinheit soll weiterhin auch per Hand erfolgen können.
Eine weitere Aufgabe ist es, den Energieverbrauch und die bewegte Masse zur Entriegelung einer Verriegelungseinheit zu reduzieren.
Es ist zudem Bestandteil der Aufgabenstellung, einen Fahrzeugsitz mit einem entsprechenden Aktuator bereitzustellen.

### Lösung

Diese Aufgabe wird erfindungsgemäß durch einen Aktuator mit den Merkmalen des Anspruchs 1 gelöst. Vorteilhafte Ausgestaltungen, welche einzeln oder in Kombination miteinander eingesetzt werden können, insofern sie innerhalb des durch die Ansprüche definierten Schutzes bleiben, sind Gegenstand der Unteransprüche.
Ein gattungsgemäßer Aktuator für einen Fahrzeugsitz umfasst ein Gehäuse, einen gehäusefest angeordneten Motor mit einer Motorwelle, ein Getriebe, welches mittels der Motorwelle abtriebsseitig an den Motor angeschlossen ist, einen Aktuatorabtrieb, welcher abtriebsseitig an das Getriebe angeschlossen ist, und eine Steuereinheit, wobei der Aktuatorabtrieb ein Ausgangselement aufweist, welches mittels Drehung der Motorwelle in eine erste Drehrichtung von einer Anfangslage in Richtung einer Endlage beweglich ist, wobei mittels der Steuereinheit die Drehrichtung der Motorwelle von der ersten Drehrichtung in eine entgegengesetzte zweite Drehrichtung umkehrbar ist, so dass das Ausgangselement von der Endlage in Richtung der Anfangslage beweglich ist. Erfindungsgemäß sind ein relativ zu dem Gehäuse beweglicher Schlitten, welcher bei einer Bewegung des Ausgangselements von der Anfangslage in Richtung der Endlage antreibbar ist, und ein Positionssensor zur Erfassung mindestens einer Position des Schlittens vorgesehen.
Dadurch kann eine für eine Nichtverriegelungsanzeige einer Verriegelungseinheit notwendige Signalerfassung in den Aktuator integriert werden. Wenn der Schlitten des Aktuators an einen Mitnehmer der Verriegelungseinheit gekoppelt ist, kann mittels des Positionssensors der Verriegelungszustand der Verriegelungseinheit erfasst werden.
Dazu weist der Schlitten Mittel, insbesondere einen Stift, zur Kopplung an den Mitnehmer der Verriegelungseinheit auf.
Vorteilhaft ist der Schlitten bei einer Bewegung des Ausgangselements von der Endlage in Richtung der Anfangslage von dem Ausgangselement entkoppelt. Der erfindungsgemäße Aktuator ist eine Weiterentwicklung des aus der o.g. WO 2012/104027 A1 bekannten Aktuators mit elektrischer Selbstrückstellung. Dieser verfügt bereits über eine entsprechende Steuereinheit mit einem Mikrocontroller, Sensoren zur Steuerung des Motors und einer entsprechenden Endstufe. Über den Positionssensor wird der Verriegelungszustand der Verriegelungseinheit detektiert. Damit wird auch bei einer Betätigung von Hand an der Verriegelungseinheit der Verriegelungszustand der Verriegelungseinheit abgefragt und dem Nutzer des Fahrzeugsitzes angezeigt.
Dadurch, dass der Aktuator einen Lagesensor aufweist, der die Einwirkung der Schwerkraft auf den Aktuator erfasst, kann die Lage des Aktuators im Schwerkraftfeld erfasst werden. Entsprechende Sensoren sind aus Smartphones bekannt.
Ein integrierter Lagesensor, insbesondere ein Beschleunigungssensor, erkennt die Ausrichtung des Aktuators gegenüber dem Erdschwerefeld und kann damit erkennen, ob eine Rückenlehne aufrecht steht oder umgeklappt ist. Die jeweils deutlich unterschiedlichen Lagen der Rückenlehne in diesen beiden Positionen ermöglichen es, zur sicheren Sensierung nur genau einen Beschleunigungssensor zu verwenden. Mögliche Hanglagen, an denen das Fahrzeug abgestellt ist, sind innerhalb der Schwellwerte.
Vorteilhaft weist der Aktuatorabtrieb eine Spindel auf, entlang welcher das Ausgangselement sowie der Schlitten linear verschiebbar sind. Das Ausgangselement erfährt dabei eine lineare Verschiebung entlang der Längsachse der Spindel, wenn diese eine Drehung um die Längsachse ausführt. Der Schlitten ist nicht an die Spindel gekoppelt und kann somit unabhängig von einer Drehung der Spindel entlang der Längsachse der Spindel bewegt werden. Vorzugsweise durchläuft die Spindel dabei ein Durchgangsloch des Schlittens. Denkbar ist auch, dass der Schlitten einen Schlitz oder eine andere Führung aufweist.
Die Lösung des Problems liegt auch darin, das notwendige Steuergerät und notwendige Informationsquellen in den Aktuator zu verlegen und beide Funktionseinheiten (Aktuator und Steuergerät) in einem Gehäuse zu vereinigen, so dass der Aktuator als eigenständig "intelligente" Funktionseinheit mit einer Verriegelungseinheit kombiniert werden kann.

In dem erfindungsgemäßen Aktuator ist gemäß einer vorteilhaften Weiterbildung der Erfindung eine Steuerplatine integriert, auf der alle Bauelemente vereinigt sind um eine "intelligente" Funktion zu erreichen. Die Platine verfügt über einen Mikrocontroller, der mit einer Software ausgestattet wird, um die Informationen zu bündeln und entsprechende Befehle auszugeben. Weiterhin sind auf der Platine unterschiedliche Sensoren, beispielsweise Hall-Sensoren, Lagesensoren, Schwerkraftsensoren und/oder Beschleunigungssensoren vorhanden, die zum einem die Position und damit den Status des Aktuators und/oder den Verriegelungszustand der Verriegelungseinheit ermitteln können. Vorteilhaft ist insbesondere der Positionssensor in die Platine integriert.

Wenn der Aktuator auch einen Stromsensor aufweist, welcher den durch den Motor fließenden Strom misst, kann die Drehung des Motors geregelt werden und dieser kann leistungsgerecht und energieeffizient betrieben werden.

Gemäß einer vorteilhaften Weiterbildung der Erfindung sind auch ein erster Sensor zur Sensierung der Endlage des Ausgangselements und/oder ein zweiter Sensor zur Sensierung der Anfangslage des Ausgangselements in der Platine integriert.

Mittels einer Kommunikationsschnittstelle (z.B. LIN / CAN oder andere Systeme) ist es möglich, den Status des Aktuators und die Position der Rückenlehne an andere fahrzeugseitige Teilnehmer auszugeben und/oder die Informationen innerhalb des Aktuators zu kombinieren und damit andere Aktuatoren in Abhängigkeit anzusteuern.

Neben den Funktionen, die zur Entriegelung der Verriegelungseinheit notwendig sind, können auch weitere Funktionen über die Steuereinheit des Aktuators realisiert werden. Es ist beispielsweise möglich, entsprechende Schutzalgorithmen zu integrieren, so dass eine dauerhafte Betätigung des Aktuators nicht zu einem Defekt im Aktuator führt. Zusätzlich oder alternativ kann der Aktuator während der Fahrt des Fahrzeuges deaktiviert werden, so dass ein versehentliches Betätigen während der Fahrt ausgeschlossen ist.

Auf Grund der kurzen Distanzen zwischen der Steuerung des Aktuators und dem Motor des Aktuators ist es möglich, eine PWM - Funktion kostengünstig einzusetzen, die es erlaubt, in einem gewissen Rahmen das Geräusch des Motors, insbesondere bei dem kraftfreien Rücklauf des Aktuators, zu modifizieren.

Weitere Anwendungsbeispiele für einen erfindungsgemäßen Aktuator sind ein Kopfstützeneinzug bzw. eine Kopfstützenabklappung. Nach Erkennung, dass die Verriegelungseinheit entriegelt ist und/oder nach Erkennung, dass die Rückenlehne über ihre Senkrechte heraus in eine abgeklappte Position fällt, kann der Aktuator zur zusätzlichen Abklappung der Kopfstütze durch die Steuereinheit innerhalb des Aktuators angesteuert werden.

Optional können in Abhängigkeit von der Stellung der Rückenlehne und/oder des Verriegelungszustandes der Verriegelungseinheit auch weitere Module, wie beispielsweise Heizung oder Lüftung angesteuert werden.

Die Verriegelungsanzeige innerhalb eines Armaturenbretts eines Fahrzeuges kann in Abhängigkeit der Lage der Rückenlehne aktiviert oder deaktiviert werden.

Die Aufgabe wird auch durch einen Fahrzeugsitz mit den Merkmalen des Anspruchs 13 gelöst, welcher mindestens einen erfindungsgemäßen Aktuator umfasst.

### Figuren und Ausführungsformen der Erfindung

Im Folgenden ist die Erfindung anhand von zwei Figuren zum Stand der Technik und zwei in den weiteren Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine Draufsicht auf einen aus dem Stand der Technik bekannten Aktuator,
- Fig. 2:: eine perspektivische Ansicht des Aktuators aus Fig. 1,
- Fig. 3:: eine schematische Darstellung eines Fahrzeugsitzes,
- Fig. 4:: eine Explosionsdarstellung eines ersten Ausführungsbeispiels eines erfindungsgemäßen Aktuators und einer aus dem Stand der Technik bekannten Verriegelungseinheit,
- Fig. 5:: eine perspektivische Darstellung des Aktuators und der Verriegelungseinheit aus Fig. 4, mit geschlossenem Aktuatorgehäuse, im unbetätigten Aktuatorzustand, einem Ausgangselement in einer Ausgangsposition und mit verriegelter Verriegelungseinheit,
- Fig. 6:: eine Fig. 5 entsprechende Darstellung mit geöffnetem Aktuatorgehäuse,
- Fig. 7:: eine Fig. 6 entsprechende Darstellung im betätigten Aktuatorzustand beim Erreichen der Endposition des Ausgangselements und bei entriegelter Verriegelungseinheit,
- Fig. 8:: eine Fig. 6 entsprechende Darstellung im betätigten Aktuatorzustand beim Wiedererreichen der Ausgangsposition des Ausgangselements und bei entriegelter Verriegelungseinheit,
- Fig. 9:: eine Fig. 6 entsprechende Darstellung im unbetätigten Aktuatorzustand nach dem Wiedererreichen der Ausgangsposition des Ausgangselements und bei verriegelter Verriegelungseinheit,
- Fig. 10:: eine perspektivische Darstellung der Verriegelungseinheit und des Aktuatorabtriebs im unbetätigten Aktuatorzustand, dem Ausgangselement in einer Ausgangsposition und verriegelter Verriegelungseinheit,
- Fig. 11:: eine Detailansicht aus Fig. 10,
- Fig. 12:: eine perspektivische Darstellung der Verriegelungseinheit und des Aktuatorabtriebs im unbetätigten Aktuatorzustand, dem Ausgangselement in einer Ausgangsposition und entriegelter Verriegelungseinheit,
- Fig. 13:: eine Detailansicht aus Fig. 12,
- Fig. 14:: eine perspektivische Ansicht eines zweiten Ausführungsbeispiels eines erfindungsgemäßen Aktuators und einer aus dem Stand der Technik bekannten Verriegelungseinheit und
- Fig. 15:: eine Detailansicht aus Fig. 14.

Ein Fahrzeugsitz 1 eines Kraftfahrzeuges weist wenigstens einen Aktuator 110, 210 auf, mittels dessen eine Sitzkomponente einstellbar oder eine Funktion, einschließlich einem Öffnen einer Verriegelungseinheit 60, auslösbar ist. Vorliegend ist der erfindungsgemäße Aktuator 110, 210 mit einer aus dem Stand der Technik, beispielsweise aus der WO 2012/152361 A1, bekannten Verriegelungseinheit 60 derart wirkverbunden, dass eine Aktivierung des Aktuators 110, 210 zu einem Entriegeln der Verriegelungseinheit 60 führt.

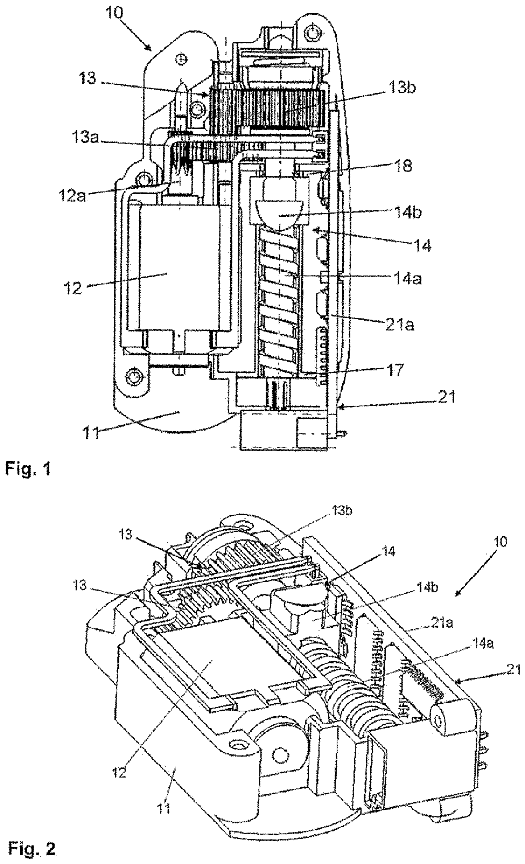

In den Figuren 1 und 2 ist ein aus der WO 2012/104027 A1 bekannter Aktuator 10 gezeigt, dessen Grundaufbau dem erfindungsgemäßen Aktuator 110, 210 zugrunde liegt und der daher nachfolgend zuerst beschrieben ist.

Der Aktuator 10 weist ein Gehäuse 11 auf, innerhalb dessen ein elektrischer Motor 12 gehäusefest angeordnet ist. An den Motor 12 ist abtriebsseitig ein Getriebe 13 angeschlossen, indem die mit einer Verzahnung versehene Motorwelle 12a des Motors 12 mit einem im Durchmesser größeren Antriebsstirnradabschnitt eines ersten Zahnrades 13a des Getriebes 13 kämmt, welches drehbar im Gehäuse 11 gelagert ist. Ein im Durchmesser kleinerer Abtriebsstirnradabschnitt des ersten Zahnrades 13a kämmt mit einem im Durchmesser größeren zweiten Zahnrad 13b des Getriebes 13, welches ebenfalls im Gehäuse 11 gelagert ist.

An das Getriebe 13 ist abtriebsseitig ein Aktuatorabtrieb 14 angeschlossen, welcher vorliegend als Spindelgetriebe ausgebildet ist. Dazu ist das als Stirnrad ausgebildete zweite Zahnrad 13b an einer Spindel 14a des Aktuatorabtriebs 14 befestigt. Die Mittelachse der Spindel 14a fluchtet mit der Drehachse des Zahnrades 13b und ist drehbar im Gehäuse 11 gelagert. Die Spindel 14a ist vorliegend parallel zur Motorwelle 12a angeordnet. Auch eine andere Anordnung der Spindel 14a, beispielsweise senkrecht zu der Motorwelle 12a, ist denkbar. Mit einem Gewinde der Spindel 14a wirkt eine auf der Spindel 14a sitzende Spindelmutter mit Innengewinde zusammen, welche als Ausgangselement 14b des Aktuatorabtriebs 14 dient. Das Ausgangselement 14b ist entlang der Spindel 14a verschiebbar im Gehäuse 11 gelagert, kann jedoch nicht um die Spindel 14a verdreht werden. Eine Drehbewegung der Spindel 14a verursacht somit eine Linearbewegung des Ausgangselements 14b.

Im Anfangszustand, das heißt im unbetätigten Aktuatorzustand, ist das Ausgangselement 14b an dem Ende der Spindel 14a angeordnet, das benachbart zu dem zweiten Zahnrad 13b ist. Im betätigten Aktuatorzustand wird das Ausgangselement 14b durch die sich drehende Spindel 14a in Richtung des vom zweiten Zahnrad 13b abgewandten Endes der Spindel 14a bewegt. Es ist auch denkbar, dass das Ausgangselement 14b im unbetätigten Aktuatorzustand an dem dem zweiten Zahnrad 13b abgewandten Ende der Spindel 14a angeordnet ist. In diesem Fall wird das Ausgangselement 14b im betätigten Aktuatorzustand durch die sich drehende Spindel in Richtung des dem zweiten Zahnrad 13b benachbarten Endes der Spindel 14a bewegt.

Zur Sensierung der Endlage des Ausgangselements 14b ist an demjenigen Lager der Spindel 14a, welches sich an dem dem zweiten Zahnrad 13b abgewandten Ende der Spindel 14a befindet, ein erster Sensor 17 gehäusefest angeordnet. Zur Sensierung der Anfangslage des Ausgangselements 14b ist an demjenigen Lager der Spindel 14a, welches sich an dem Ende der Spindel 14a mit dem zweiten Zahnrad 13b befindet, ein zweiter Sensor 18 gehäusefest angeordnet. Die Sensoren 17 und 18 können mechanisch, beispielsweise als Microswitch, induktiv, beispielsweise als Hall-Sensor, oder kapazitiv ausgebildet sein.

An einer Seite des Gehäuses 11, vorliegend auf der vom Motor 12 räumlich abgewandten Seite des Aktuatorabtriebs 14, ist eine Steuereinheit 21 angeordnet, vorliegend eine Platine 21a mit mehreren IC-Bausteinen, beispielsweise Logik-Bausteinen, leistungssteuernden Bausteinen, insbesondere zur Pulsweitenmodulation, Endstufen, beispielsweise eine Voll-Brücke, Kommunikationsbausteinen und Bauteilen zum Schutz der Steuereinheit 21 gegen Überspannung, ESD/EMV, Temperatur oder dergleichen. Alternativ sind alle diese Funktionen in einen einzigen Baustein integriert, welcher entsprechende Schnittstellen aufweist. Die Platine 21a bildet beispielsweise eine Wand des Gehäuses 11.

Die Steuereinheit 21 weist vorzugsweise eine interne Spannungsversorgung mit zwei Versorgungsanschlüssen auf, die von der Platine 21a nach außen abstehen. Die Steuereinheit 21 weist vorzugsweise ferner eine Netzschnittstelle mit wenigstens einem Signalanschluss auf. Die Netzschnittstelle dient der Kommunikation beispielsweise mit einem LIN-Bus, welcher den einen Signalanschluss und den Versorgungsanschluss nutzt. Die Netzschnittstelle kann alternativ der Kommunikation mit einem anderen Daten-Bus, beispielsweise einem CAN-Bus, welcher dann mehr Anschlüsse benötigt, oder einem anderen Netzwerk dienen.

Die Steuereinheit 21 weist vorzugsweise auch eine Sensorschnittstelle auf, welche mit dem ersten Sensor 17 und dem zweiten Sensor 18 verbunden ist. Die Steuereinheit 21 weist vorzugsweise eine Logik auf, an welche die Netzschnittstelle und die Sensorschnittstelle angeschlossen sind.

Die Steuereinheit 21 weist schließlich vorzugsweise eine Motorsteuerung auf, welche an die Logik angeschlossen ist und den Motor 12 steuert, und zwar sowohl hinsichtlich der Drehrichtung als auch hinsichtlich einer Strombegrenzung. Die Motorsteuerung sowie die Logik, die Netzschnittstelle und die Sensorschnittstelle werden von der internen Spannungsversorgung versorgt. Leistungstransistoren oder dergleichen können außerhalb des IC-Bausteins für die Motorsteuerung vorgesehen sein.

Der Aktuator 10 beinhaltet als Baugruppe mechanische, elektrische, insbesondere elektromotorische, und elektronische Bauteile, so dass alle notwendigen Funktionalitäten in den Aktuator 10 integrierbar sind und innerhalb des Aktuators 10 verarbeitet werden können. Die Kommunikation zum Fahrzeugsitz 1 und zum Fahrzeug, insbesondere zu Betätigungselementen, erfolgt vorliegend über die Netzschnittstelle mit entsprechender Implementierung. Die weiteren Funktionalitäten werden im Wesentlichen durch die Hardware der Steuereinheit 21 bestimmt. In mechanischer Hinsicht sind vorzugsweise der Motor 12, das Getriebe 13 und die Spindel 14a, jeweils samt Lagern, sowie die Steuereinheit 21 vollständig in das Gehäuse 11 integriert.

Eine Positionserkennung ist, außer mittels der Sensoren 17 und 18, deren Daten mittels der Sensorschnittstelle eingespeist werden, zusätzlich oder alternativ mittels einer Strom-, Spannungs- und Zeitmessung möglich. Die Charakteristik der Veränderung dieser Parameter kann genutzt werden, um beim Ausgangselement 14b zwischen dem Erreichen der Endlage oder der Anfangslage einerseits und einem Einklemmen in einer Mittellage zu unterscheiden. Außer der digitalen Positionserkennung mittels der Sensoren 17 und 18 wäre auch eine kontinuierliche Positionserkennung mittels eines entsprechenden Sensors möglich.

Die Motorsteuerung verfügt vorzugsweise über eine Strombegrenzung mittels Pulsweitenmodulation. Nach Überschreiten eines Grenzwertes für den Strom, welcher beispielsweise mittels eines Shunts auf der Platine 21a gemessen wird, wird die Spannung für den Motor 12 mittels der Pulsweitenmodulation reduziert, damit der Motor 12 nicht mehr als den vordefinierten Grenzwert des Stromes erhält. Die Motorsteuerung verfügt ferner über eine Drehrichtungsumkehr, welche sowohl der Rückstellung des Aktuators 10 als auch als Überlastschutz dient. In der ersten Drehrichtung der Motorwelle 12a bewegt der Motor 12 mittels des Getriebes 13 und der Spindel 14a das Ausgangselement 14b von der Anfangslage in Richtung Endlage.

Mit der zweiten Drehrichtung der Motorwelle 12a, welche der ersten Drehrichtung der Motorwelle 12a entgegengesetzt ist, bewegt der Motor 12 das Ausgangselement 14b von der Endlage zurück in Richtung Anfangslage. Aufgrund dieser Rückstellung mittels Drehrichtungsumkehr entfallen Kupplungen und Federn. Aufgrund des Entfalls der zu spannenden Feder braucht der Motor 12 nicht so leistungsstark zu sein, so dass die Leistung des Motors 12 vollständig für die Ansteuerung des Aktuators zur Verfügung steht. Die Realisierung der Rückstellung mittels Drehrichtungsumkehr erfolgt beispielsweise durch eine Vollbrücke mit Leistungstransistoren, welche den Motor 12 ansteuert.

Ausgehend von einem unbetätigten, passiven Zustand wird der Aktuator 10 aktiviert, wodurch er in einen betätigten, aktiven Zustand wechselt, mittels eines Schaltvorgangs, der vom Benutzer an einem Betätigungselement ausgelöst und vorzugsweise mittels des Daten-Buses an den Aktuator 10 übermittelt wird. Alternativ wird die Aktivierung des Aktuators 10 mittels eines einfachen elektrischen Tasters ausgelöst. Zwischen der Aktivierung des Aktuators 10 und dem Abschalten des Motorstroms, wodurch der Aktuator einen passiven Zustand annimmt, hat der Benutzer keinen Einfluss auf den Aktuator 10, d.h. die Netzschnittstelle ist blockiert.

Die Rückstellung des Aktuators 10, also die Rückführung des Ausgangselementes 14b in die Anfangslage, kann aktiv erfolgen aufgrund eines vom Bediener ausgelösten Schaltvorgangs oder aufgrund einer bestimmten Position des Aktuators 10. Beispielsweise kann bei einem Einsatz in einer diskontinuierlichen Verriegelungseinheit 60 mittels eines Schaltvorgangs, beispielsweise an einem Taster von "0" nach "1", der Aktuator 10 zum Entriegeln aktiviert werden, so dass die Verriegelungseinheit 60 sich öffnet. Wenn die Verriegelungseinheit 60 geöffnet ist, schaltet die Steuereinheit 21 aufgrund der Positionserkennung um und betreibt den Motor 12 mit einer Drehrichtungsumkehr, bis das Ausgangselement 14b wieder die Anfangslage erreicht, und der Motor 12 aufgrund der Positionserkennung wieder abgeschaltet wird. Der Aktuator 10 ist dann im passiven Zustand. Die Verriegelungseinheit 60 kann dann ungehindert vom Aktuator 10 mechanisch verriegeln. Alternativ schaltet die Steuereinheit 21 den Motor 12 ab, wenn die Verriegelungseinheit 60 geöffnet ist, und betreibt ihn erst nach einem Schaltvorgang von "1" nach "0" mit einer Drehrichtungsumkehr.

Die Drehrichtungsumkehr bei Überlast erfolgt vorzugsweise, wenn durch die Positionserkennung von einer mechanischen Überlast auszugehen ist, insbesondere in einer Mittellage, d.h. wenn weder eine Anfangslage noch eine Endlage des Ausgangselements 14b vorliegt, aber der Strombedarf trotzdem stark ansteigt. Der Motor 12 erhält eine Drehrichtungsumkehr, und das Ausgangselement 14b wird vorzugsweise in seine Anfangslage zurückgebracht, damit der Aktuator 10 nicht in der eingeklemmten Lage verharrt.

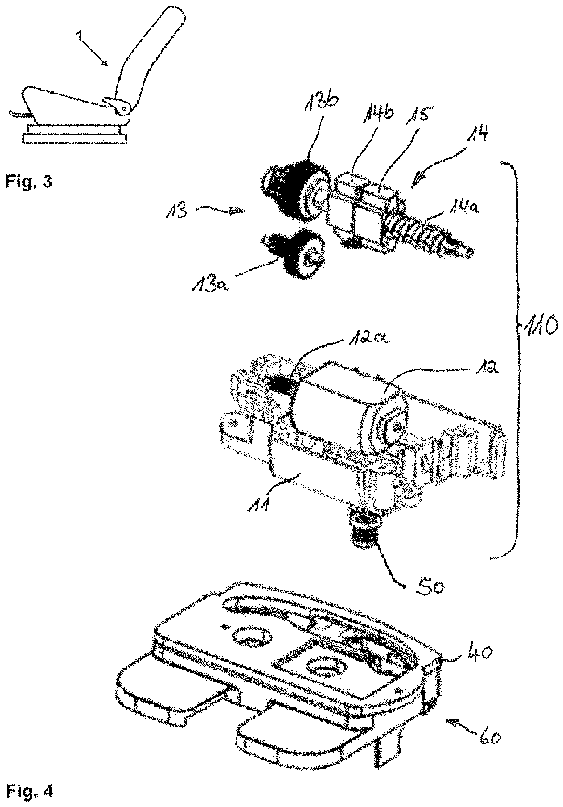

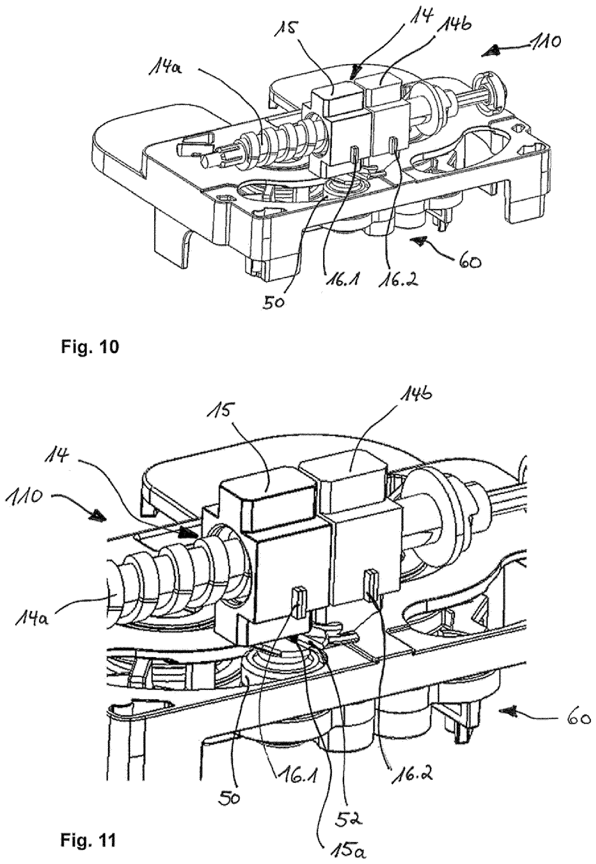

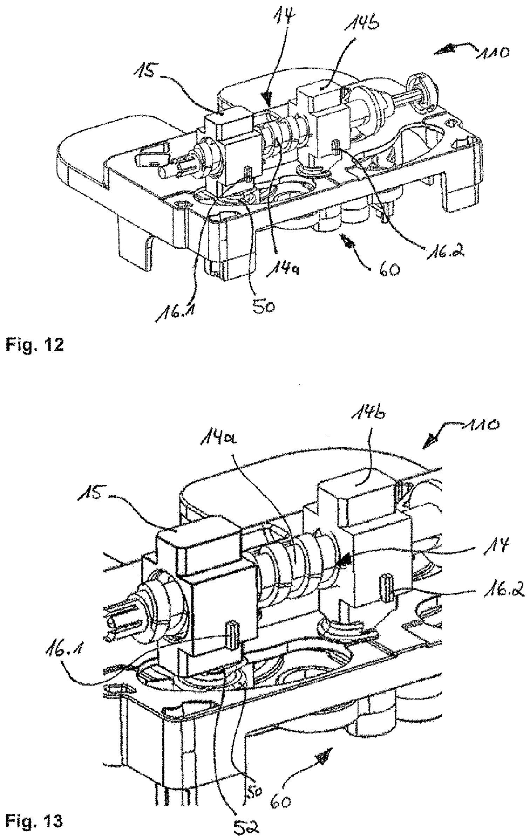

In den Figuren 4 bis 13 ist als erstes Ausführungsbeispiel eines erfindungsgemäßen Aktuators der Aktuator 110 beschrieben. Der Grundaufbau des Aktuators 110 entspricht weitgehend dem Grundaufbau des zuvor beschriebenen, aus dem Stand der Technik bekannten Aktuators 10. Gleichwirkende Bauteile tragen daher gleiche Bezugszeichen. Es werden nur die vom Aktuator 10 abweichenden Bauteile und Funktionen des Aktuators 110 beschrieben.

Ein Schlitten 15 ist in dem Gehäuse 11 linear verschieblich neben dem Ausgangselement 14b, auf der vom zweiten Zahnrad 13b abgewandten Seite des Ausgangselements 14b, angeordnet. Die Spindel 14a durchläuft ein Durchgangsloch des Schlittens 15, ohne dass das Gewinde der Spindel 14a in Gewindeeingriff mit dem Schlitten 15 ist. Der Schlitten 15 ist relativ linear verschieblich zur Spindel 14a im Gehäuse 11 gelagert und kann nicht um die Spindel 14a verdreht werden. Eine Drehbewegung der Spindel 14a verursacht somit keine unmittelbare Linearbewegung des Schlittens 15.

An dem Schlitten 15 ist ein zapfenartiger Stift 15a befestigt, vorliegend angeformt. Der Stift 15a dient zur Kopplung des Aktuators 110 an die Verriegelungseinheit 60.

Die Verriegelungseinheit 60 ist als ein Drehfallenschloss mit einer Klinke zum Verriegeln eines Gegenelementes ausgebildet. Das in einem Hakenmaul der Klinke aufgenommene Gegenelement kann im verriegelten Zustand der Verriegelungseinheit 60 die Klinke nicht verlassen. In einem entriegelten Zustand der Verriegelungseinheit 60 ist das Klinkenmaul derart angeordnet, dass das Gegenelement die Klinke und die Verriegelungseinheit 60 verlassen kann.

Die Verriegelungseinheit 60 umfasst als Verbindungsteil zum Aktuator 110 einen Mitnehmer 50 mit einem Mitnehmerschlitz 52. Durch Bewegen des Mitnehmers 50 in eine definierte Betätigungsrichtung wird die Verriegelungseinheit 60 von dem verriegelten Zustand in den entriegelten Zustand versetzt. Die Position des Mitnehmers 50 relativ zu einem Gehäuse der Verriegelungseinheit 60 ist dabei abhängig von dem Verriegelungszustand der Verriegelungseinheit 60.

Der Schlitten 15 umfasst einen ersten Magneten 16.1 und das Ausgangselement 14b einen zweiten Magneten 16.2. Der zweite Magnet 16.2 wirkt mit den Sensoren 17, 18 zusammen und dient der Positionserkennung des Ausgangselements 14b und in an sich bekannter und zuvor beschriebener Weise zur Steuerung des Motors 12. Der erste Magnet 16.1 wirkt mit einem in den Figuren nicht dargestellten Positionssensor zusammen, der sich zwischen dem ersten Sensor 17 und dem zweiten Sensor 18 befindet und vorzugsweise in der Platine 21a integriert ist. In einer Ausgangsposition des Schlittens 15, die einem verriegelten Zustand der Verriegelungseinheit 60 entspricht, befindet sich der erste Magnet 16.1 nächstmöglich an dem Positionssensor.

Im verriegelten Zustand der Verriegelungseinheit 60 befindet sich der Mitnehmer 50 in einer Ausgangsposition. Durch Bewegen des Mitnehmers 50 in eine Endposition wird die Verriegelungseinheit 60 entriegelt, und das Gegenelement verlässt das Hakenmaul der Klinke. Solange anschließend das Gegenelement nicht wieder in das Hakenmaul der Klinke eintritt, verbleibt der Mitnehmer 50 in seiner dem entriegelten Zustand der Verriegelungseinheit 60 zugeordneten Endposition. Wenn ein Gegenelement in das Hakenmaul der Klinke eintritt und die Klinke in einen verriegelbaren Zustand schwenkt und die Klinke verriegelt, wird der Mitnehmer 50 zwangsläufig in seine Ausgangsposition geführt.

Der Aktuator 110 ist unter Zwischenlage eines Adapters 40 mittels mehrerer Schrauben 30 mit der Verriegelungseinheit 60 verschraubt. Der Adapter 40 ist ein weitgehend ebenes Bauteil mit Durchgangslöchern für die Schrauben 30. Auch andere Verbindungstechniken, insbesondere eine Klipsverbindung, sind denkbar.

Der Stift 15a des Schlittens 15 greift durch eine langlochförmige Aussparung des Adapters 40 hindurch in den Mitnehmerschlitz 52. Der Mitnehmerschlitz 52 ist länglich ausgebildet, wobei die Breite des Mitnehmerschlitzes 52 nur geringfügig breiter als der Durchmesser des Stiftes 15a ist. Der Mitnehmerschlitz 52 ist quer zur möglichen Bewegungsrichtung des Schlittens 15 orientiert, so dass eine Bewegung des Schlittens 15 über den Stift 15a den Mitnehmer 50 bewegt.

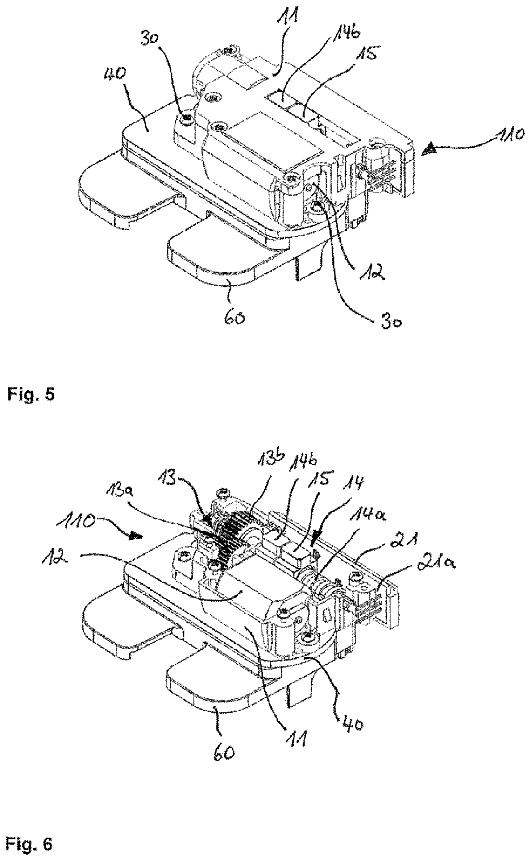

In den Figuren 5 und 6 ist der Aktuator 110 in einem unbetätigten Zustand. Das Ausgangselement 14b und der Schlitten 15 sind jeweils in ihrer Ausgangsposition. Die Verriegelungseinheit 60 ist verriegelt.

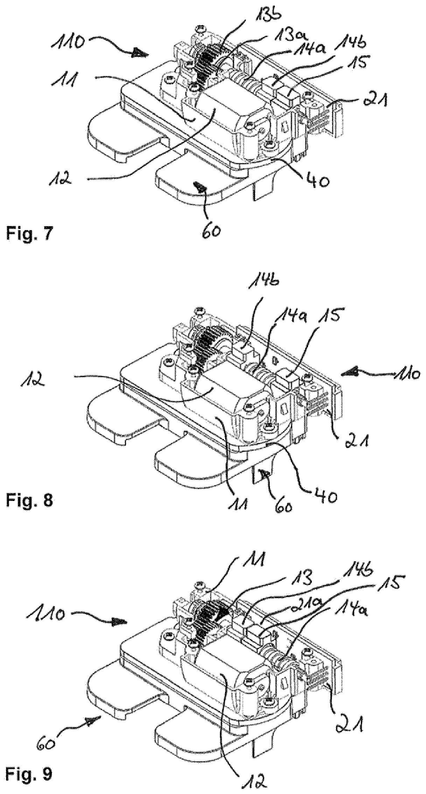

In Fig. 7 ist der Aktuator in einem betätigten Zustand dargestellt. Das Ausgangselement 14b und der Schlitten 15 sind jeweils in ihrer Endposition. Die Verriegelungseinheit 60 ist entriegelt. Zum Einnehmen der dargestellten Endpositionen von Ausgangselement 14b und Schlitten 15 wird das Ausgangselement 14b über die Spindel 14a angetrieben und aus der Ausgangsposition in Richtung der Endposition bewegt. Das Ausgangselement 14b nimmt dabei den Mitnehmer 50 mit, der die Verriegelungseinheit 60 entriegelt. Der Mitnehmer 50 verschiebt dabei über den Mitnehmerschlitz 52 und den Stift 15a den Schlitten 15.

Der Positionssensor erkennt in dieser Endposition, dass der an dem Schlitten 15 befestigte erste Magnet 16.1 nicht in der Nähe des Positionssensors ist und erzeugt dadurch ein Signal "entriegelte Verriegelungseinheit 60".

Nach Erreichen der Endposition und damit der Entriegelung der Verriegelungseinheit 60 fährt das Ausgangselement 14b des Aktuators 110 selbstgesteuert in dessen Ausgangsposition zurück. Der Schlitten 15 verweilt in der Endposition, da sich die Verriegelungseinheit 60 in der entriegelten Position befindet. Dieser Zustand ist in Fig. 8 dargestellt. Der Positionssensor erfasst den Verriegelungszustand der Verriegelungseinheit 60 weiterhin als entriegelt.

Wird die Verriegelungseinheit 60 verriegelt, wird der Schlitten 15 über den Stift 15a von dem Mitnehmer 50 der Verriegelungseinheit 60 in Richtung seiner Ausgangsposition entlang der Spindel 14a verschoben, bis der Schlitten 15 seine Ausgangsposition wieder erreicht hat. Der auf dem Schlitten 15 mitgeführte erste Magnet 16.1 wird durch den Positionssensor erkannt. Der Positionssensor des Aktuators 110 erfasst den Verriegelungszustand der Verriegelungseinheit 60 als verriegelt.

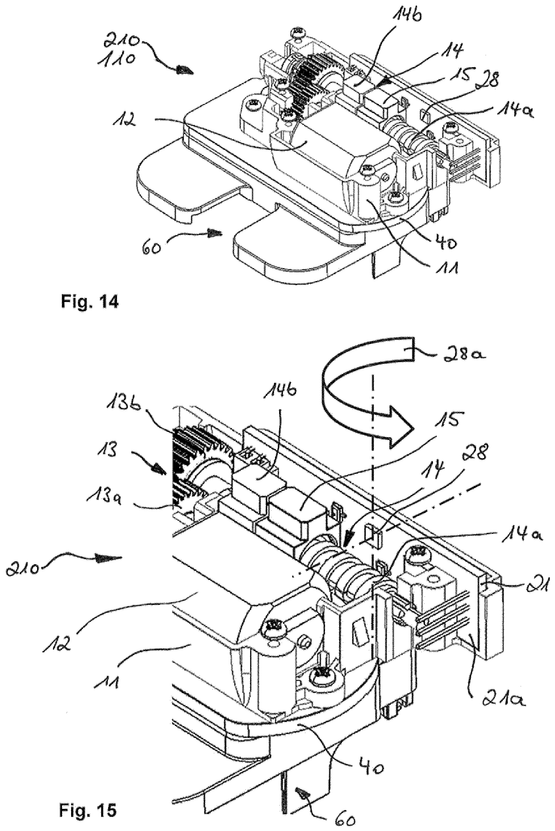

In den Figuren 14 und 15 ist als zweites Ausführungsbeispiel eines erfindungsgemäßen Aktuators der Aktuator 210 beschrieben. Der Grundaufbau des Aktuators 210 entspricht weitgehend dem Grundaufbau des zuvor beschriebenen Aktuators 110. Gleichwirkende Bauteile tragen daher gleiche Bezugszeichen. Es werden nur die vom Aktuator 110 abweichenden Bauteile und Funktionen des Aktuators 210 beschrieben.

Der Aktuator 210 des zweiten Ausführungsbeispiels weist gegenüber dem Aktuator 110 des ersten Ausführungsbeispiels zusätzlich einen Schwerkraftsensor als Lagesensor 28 auf, der Lageänderungen 28a des Aktuators 210 erkennt. Der Lagesensor 28 ist auf der Platine 21a befestigt und damit relativ zum Aktuator 210 fixiert. Der Aktuator 210 ist über den Adapter 40 auf der Verriegelungseinheit 60 fixiert. Die Verriegelungseinheit 60 ist vorliegend an einer Rückenlehne des Fahrzeugsitzes 1 befestigt. Damit erkennt der Lagesensor 28 die Lage der Rückenlehne über die Einwirkung der Schwerkraft. Die relevante Achse wird ausgewertet und der Aktuator 210 erkennt, ob die Rückenlehne in eine Nichtgebrauchsposition umgelegt ist, oder sich in einer aufrechten, einsitzbaren Gebrauchsposition befindet.
Der Aktuator 210 erkennt somit beispielsweise, ob die Rückenlehne sich in einer aufrechten Gebrauchsposition befindet und gleichzeitig die Verriegelungseinheit 60 verriegelt ist, so dass der Fahrzeugsitz 1 zum Transport eines Insassen geeignet ist. Ebenso erkennt der Aktuator 210 beispielsweise, ob die Rückenlehne sich in einer flachen Nichtgebrauchsposition befindet und gleichzeitig die Verriegelungseinheit 60 entriegelt ist, also eine gewollte unverriegelte Position vorliegt.

In einem in den Figuren nicht dargestellten, nicht zur Erfindung gehörenden dritten Ausführungsbeispiel entfällt der Schlitten 15, jedoch ist ein Lagesensor 28 vorgesehen.

### Bezugszeichenliste

- 1: Fahrzeugsitz
- 10, 110, 210: Aktuator
- 11: Gehäuse
- 12: Motor
- 12a: Motorwelle
- 13: Getriebe
- 13a: erstes Zahnrad
- 13b: zweites Zahnrad
- 14: Aktuatorabtrieb
- 14a: Spindel
- 14b: Ausgangselement
- 15: Schlitten
- 15a: Stift
- 16.1: erster Magnet
- 16.2: zweiter Magnet
- 17: erster Sensor
- 18: zweiter Sensor
- 21: Steuereinheit
- 21a: Platine
- 28: Lagesensor
- 28a: Lageänderung
- 30: Schraube
- 40: Adapter
- 50: Mitnehmer
- 52: Mitnehmerschlitz
- 60: Verriegelungseinheit

## Patentansprüche

1. Aktuator (110) für einen Fahrzeugsitz (1), mit einem Gehäuse (11), einem gehäusefest angeordneten Motor (12) mit einer Motorwelle (12a), einem Getriebe (13), welches mittels der Motorwelle (12a) abtriebsseitig an den Motor (12) angeschlossen ist, einem Aktuatorabtrieb (14), welcher abtriebsseitig an das Getriebe (13) angeschlossen ist, und einer Steuereinheit (21), wobei der Aktuatorabtrieb (14) ein Ausgangselement (14b) aufweist, welches mittels Drehung der Motorwelle (12a) in eine erste Drehrichtung von einer Anfangslage in Richtung einer Endlage beweglich ist, wobei mittels der Steuereinheit (21) die Drehrichtung der Motorwelle (12a) von der ersten Drehrichtung in eine entgegengesetzte zweite Drehrichtung umkehrbar ist, so dass das Ausgangselement (14b) von der Endlage in Richtung der Anfangslage beweglich ist,
**dadurch gekennzeichnet, dass**
der Aktuator (110) einen relativ zum Gehäuse (11) beweglichen Schlitten (15) aufweist, welcher bei einer Bewegung des Ausgangselements (14b) von der Anfangslage in Richtung der Endlage antreibbar ist, und dass ein Positionssensor zur Erfassung mindestens einer Position des Schlittens (15) vorgesehen ist.

2. Aktuator (110) nach Anspruch 1, **dadurch gekennzeichnet, dass** der Schlitten (15) Mittel zur Kopplung an einen Mitnehmer (50) einer Verriegelungseinheit (60) aufweist.

3. Aktuator (110) nach Anspruch 2, **dadurch gekennzeichnet, dass** das Mittel ein Stift (15a) ist.

4. Aktuator (110) nach einem der vorstehenden Ansprüche, **dadurch gekennzeichnet, dass** der Schlitten (15) bei einer Bewegung des Ausgangselements (14b) von der Endlage in Richtung der Anfangslage von dem Ausgangselement (14b) entkoppelt ist.

5. Aktuator (110) nach einem der vorstehenden Ansprüche, **dadurch gekennzeichnet, dass** ein Lagesensor (28) vorgesehen ist, welcher die Einwirkung der Schwerkraft auf den Aktuator (110, 120) erfasst.

6. Aktuator (110) nach Anspruch 5, **dadurch gekennzeichnet, dass** der Lagesensor (28) ein Beschleunigungssensor ist.

7. Aktuator (110) nach einem der vorstehenden Ansprüche, **dadurch gekennzeichnet, dass** der Aktuatorabtrieb (14) eine Spindel (14a) aufweist, entlang welcher das Ausgangselement (14b) sowie der Schlitten (15) verschiebbar sind.

8. Aktuator (110) nach Anspruch 7, **dadurch gekennzeichnet, dass** die Spindel (14a) ein Durchgangsloch des Schlittens (15) durchläuft.

9. Aktuator (110) nach einem der vorstehenden Ansprüche, **dadurch gekennzeichnet, dass** die Steuereinheit (21) eine Platine (21a) aufweist, in welcher der Positionssensor integriert ist.

10. Aktuator (110) nach Anspruch 9, **dadurch gekennzeichnet, dass** auf der Platine (21a) der Steuereinheit (21) wenigstens ein weiterer Sensor angeordnet ist.

11. Aktuator (110) nach Anspruch 10, **dadurch gekennzeichnet, dass** der wenigstens eine weitere Sensor ein Hall-Sensor, ein Lagesensor, ein Schwerkraftsensor und/oder ein Beschleunigungssensor ist.

12. Aktuator (110) nach Anspruch 9, **dadurch gekennzeichnet, dass** ein erster Sensor (17) zur Sensierung der Endlage des Ausgangselements (14b) und/oder ein zweiter Sensor (18) zur Sensierung der Anfangslage des Ausgangselements (14b) in der Platine (21a) integriert sind.

13. Fahrzeugsitz (1), umfassend mindestens einen Aktuator (110) nach einem der Ansprüche 1 bis 12.

## Claims

1. Actuator (110) for a vehicle seat (1), having a housing (11), a motor (12), which is fixed to the housing and which has a motor shaft (12a), a transmission (13), which is connected at the output side to the motor (12) by means of the motor shaft (12a), an actuator output drive (14), which is connected at the output side to the transmission (13), and a control unit (21), wherein the actuator output drive (14) has an output element (14b), which can be moved in the direction of an end position from a starting position by rotating the motor shaft (12a) in a first direction of rotation, wherein the direction of rotation of the motor shaft (12a) can be reversed from the first direction of rotation to an opposite second direction of rotation by means of the control unit (21), thus allowing the output element (14b) to be moved from the end position in the direction of the starting position, **characterized in that**
the actuator (110) has a slide (15), which can be moved relative to the housing (11) and which can be driven during a movement of the output element (14b) from the starting position in the direction of the end position, and **in that** a position sensor is provided for detecting at least one position of the slide (15) .

2. Actuator (110) according to Claim 1, **characterized in that** the slide (15) has means for coupling to a catch (50) of a locking unit (60).

3. Actuator (110) according to Claim 2, **characterized in that** the means is a pin (15a).

4. Actuator (110) according to one of the preceding claims, **characterized in that** the slide (15) is decoupled from the output element (14b) during a movement of the output element (14b) from the end position in the direction of the starting position.

5. Actuator (110) according to one of the preceding claims, **characterized in that** a position sensor (28) is provided, which detects the action of gravity on the actuator (110).

6. Actuator (110) according to Claim 5, **characterized in that** the position sensor (28) is an acceleration sensor.

7. Actuator (110) according to one of the preceding claims, **characterized in that** the actuator output drive (14) has a spindle (14a), along which the output element (14b) and the slide (15) can be moved.

8. Actuator (110) according to Claim 7, **characterized in that** the spindle (14a) passes through a through hole in the slide (15).

9. Actuator (110) according to one of the preceding claims, **characterized in that** the control unit (21) has a circuit board (21a), in which the position sensor is integrated.

10. Actuator (110) according to Claim 9, **characterized in that** at least one further sensor is arranged on the circuit board (21a) of the control unit (21).

11. Actuator (110) according to Claim 10, **characterized in that** the at least one further sensor is a Hall effect sensor, a position sensor, a gravitational force sensor and/or an acceleration sensor.

12. Actuator (110) according to Claim 9, **characterized in that** a first sensor (17) for sensing the end position of the output element (14b) and/or a second sensor (18) for sensing the starting position of the output element (14b) are integrated in the circuit board (21a).

13. Vehicle seat (1) comprising at least one actuator (110) according to one of Claims 1 to 12.

## Revendications

1. Actionneur (110) pour un siège de véhicule (1), comprenant un boîtier (11), un moteur (12) disposé de manière fixée au boîtier, avec un arbre de moteur (12a), une transmission (13) qui est raccordée au moteur (12) du côté de la prise de force au moyen de l'arbre de moteur (12a), une prise de force d'actionneur (14) qui est raccordée du côté de la prise de force à la transmission (13) et une unité de commande (21), la prise de force d'actionneur (14) présentant un élément de sortie (14b) qui peut être déplacé par rotation de l'arbre de moteur (12a) dans un premier sens de rotation d'une position initiale dans la direction d'une position finale, le sens de rotation de l'arbre de moteur (12a) pouvant être inversé au moyen de l'unité de commande (21) du premier sens de rotation dans un deuxième sens de rotation opposé de telle sorte que l'élément de sortie (14b) puisse être déplacé de la position finale dans la direction de la position initiale, **caractérisé en ce que**
l'actionneur (110) présente un chariot (15) déplaçable par rapport au boîtier (11), lequel peut être entraîné lors d'un déplacement de l'élément de sortie (14b) de la position initiale dans la direction de la position finale, et **en ce qu'**il est prévu un capteur de position pour détecter au moins une position du chariot (15).

2. Actionneur (110) selon la revendication 1, **caractérisé en ce que** le chariot (15) présente des moyens d'accouplement à un dispositif d'entraînement (50) d'une unité de verrouillage (60) .

3. Actionneur (110) selon la revendication 2, **caractérisé en ce que** le moyen est une goupille (15a).

4. Actionneur (110) selon l'une quelconque des revendications précédentes, **caractérisé en ce que** le chariot (15) est désaccouplé de l'élément de sortie (14b) lors d'un déplacement de l'élément de sortie (14b) de la position finale dans la direction de la position initiale.

5. Actionneur (110) selon l'une quelconque des revendications précédentes, **caractérisé en ce qu'**il est prévu un capteur de position (28) qui détecte l'action de la force de pesanteur sur l'actionneur (110, 120).

6. Actionneur (110) selon la revendication 5, **caractérisé en ce que** le capteur de position (28) est un capteur d'accélération.

7. Actionneur (110) selon l'une quelconque des revendications précédentes, **caractérisé en ce que** la prise de force d'actionneur (14) présente une broche (14a) le long de laquelle l'élément de sortie (14b) ainsi que le chariot (15) peuvent être déplacés.

8. Actionneur (110) selon la revendication 7, **caractérisé en ce que** la broche (14a) traverse un trou de passage du chariot (15).

9. Actionneur (110) selon l'une quelconque des revendications précédentes, **caractérisé en ce que** l'unité de commande (21) présente une platine (21a) dans laquelle est intégré le capteur de position.

10. Actionneur (110) selon la revendication 9, **caractérisé en ce qu'**au moins un capteur supplémentaire est disposé sur la platine (21a) de l'unité de commande (21).

11. Actionneur (110) selon la revendication 10, **caractérisé en ce que** l'au moins un capteur supplémentaire est un capteur de Hall, un capteur de position, un capteur de force de pesanteur et/ou un capteur d'accélération.

12. Actionneur (110) selon la revendication 9, **caractérisé en ce qu'**un premier capteur (17) pour détecter la position finale de l'élément de sortie (14b) et/ou un deuxième capteur (18) pour détecter la position initiale de l'élément de sortie (14b) sont intégrés dans la platine (21a).

13. Siège de véhicule (1) comprenant au moins un actionneur (110) selon l'une quelconque des revendications 1 à 12.
